# EUROPÄISCHE PATENTSCHRIFT

(11) **EP 2 327 612 B1**
(45) Veröffentlichungstag und Bekanntmachung des Hinweises auf die Patenterteilung: **27.01.2016**
(21) Anmeldenummer: 10190900.0
(22) Anmeldetag: 11.11.2010
(51) Int. Cl.: B62D 57/024, B62D 63/02

(54) **Fahrzeug zur selbständigen Inspektion von schwer zugänglichen Innenräumen**
Vehicle for the automatic inspection of inner spaces with restricted access
Véhicule pour l'inspection autonome d'espaces intérieurs difficilement accessibles

(30) Priorität: 27.11.2009 CH 18232009
(43) Veröffentlichungstag der Anmeldung: 01.06.2011
(73) Patentinhaber: ALSTOM Technology Ltd, 5400 Baden (CH)
(72) Erfinder: Rochat, Frederic, CH-1676, Chavannes-les-Forts (CH); Schoeneich, Patrick, CH-1817, Brent (CH); Mondada, Francesco, CH-1030, Bussigny (CH); Moser, Roland Richard, CH-8005, Zurich (CH)
(74) Vertreter: General Electric Technology GmbH

(56) Entgegenhaltungen:
- EP-A- 2 003 044
- JP-A- 9 175 454
- US-A- 5 388 528
- US-A- 5 819 863

## Beschreibung

### TECHNISCHES GEBIET

Die vorliegende Erfindung bezieht sich auf das Gebiet der Inspektion von Bauteilen mit schwer zugänglichen Innenräumen. Sie betrifft ein Fahrzeug zur selbständigen Inspektion von schwer zugänglichen Innenräumen gemäss dem Oberbegriff des Anspruchs 1.

### STAND DER TECHNIK

Die Inspektion von grossen Anlagen zur Energieerzeugung wie beispielsweise Gas- oder Dampfturbinen sind von grossem Interesse, um rechtzeitig Schäden zu entdecken und die Ausfallzeit derartiger Anlagen zu minimieren.

Besonders grosse Gussteile dieser Anlagen wie z.B. Dampfkästen, d.h. die Strukturen, welche die Frischdampfzuleitungen mit der Dampfturbine verbinden und alle notwendigen Ventile enthalten (siehe z.B. die EP-A1-0 005 616 oder die US-A-4,592,699), zeigen häufig Rissbildung, weil sie hohen Drücken und Temperaturen ausgesetzt sind. Wenn eine solche Rissbildung rechtzeitig, also in einem frühen Stadium, entdeckt wird, können geeignete Massnahmen eingeleitet und so schwerwiegende Folgen vermieden werden.

Während eine Inspektion auf der Aussenseite derartiger Strukturen vergleichsweise einfach ist, wird die Inspektion der Innenwände dadurch erschwert, dass die Zugangsöffnungen zu den Innenräumen im Vergleich zu den Innenräumen selbst oft sehr schmal sind und die Innenwände unregelmässige, insbesondere konkave, Formen aufweisen, die den Platz für eine in den Innenraum eingeführte Inspektionsvorrichtung begrenzen.

### DARSTELLUNG DER ERFINDUNG

Es ist daher Aufgabe der Erfindung, eine Vorrichtung zu schaffen, welche mit Vorteil für die Inspektion von Innenräumen bzw. Innenwänden in derartigen Strukturen einsetzbar ist, sich durch geringen Platzbedarf und eine gute Manövrierfähigkeit auszeichnet, für eine Vielzahl von Inspektionsarten geeignet ist und ohne Probleme an Innenwänden beliebiger räumlicher Orientierung entlang bewegt werden kann.

Die Aufgabe wird durch die Gesamtheit der Merkmale des Anspruchs 1 gelöst. Die Erfindung schlägt ein Fahrzeug vor, welches wenigstens zwei um eine gemeinsame Achse drehbare, in axialer Richtung voneinander beabstandete, unabhängig voneinander antreibbare Räder umfasst und Haftmittel, insbesondere magnetische Mittel, aufweist, welche das Fahrzeug entgegen der Schwerkraft mit den Rädern an der jeweiligen Innenwand halten.

Der einachsige Aufbau ermöglicht es, das Fahrzeug in Achsenrichtung durch begrenzte Öffnungen in den zu inspizierenden Innenraum einzuführen. Im Innenraum kann es aufgrund der beiden angetriebenen Räder in beliebige Richtung manövriert und verfahren werden, wobei es an vertikalen Wänden oder im Über-Kopf-Modus durch Haftmittel, vorzugsweise magnetische Kräfte, in Kontakt mit der jeweiligen Wand gehalten wird.

Einachsige Fahrzeuge mit zwei separat angetriebenen Rädern sind für sich genommen seit Längerem bekannt. Die DE-U1-298 08 730 offenbart ein fahrbares Gerät mit zwei Rädern und einer Radachse und einem an der Radachse pendelnd gelagerten Geräte-Grundkörper, der beispielsweise eine Fahrzeugkabine sein kann. Der Antrieb der Räder erfolgt durch einen Elektro- oder Verbrennungsmotor über ein zentrales Differentialgetriebe und zwei den Rädern zugeordnete Differentiale.

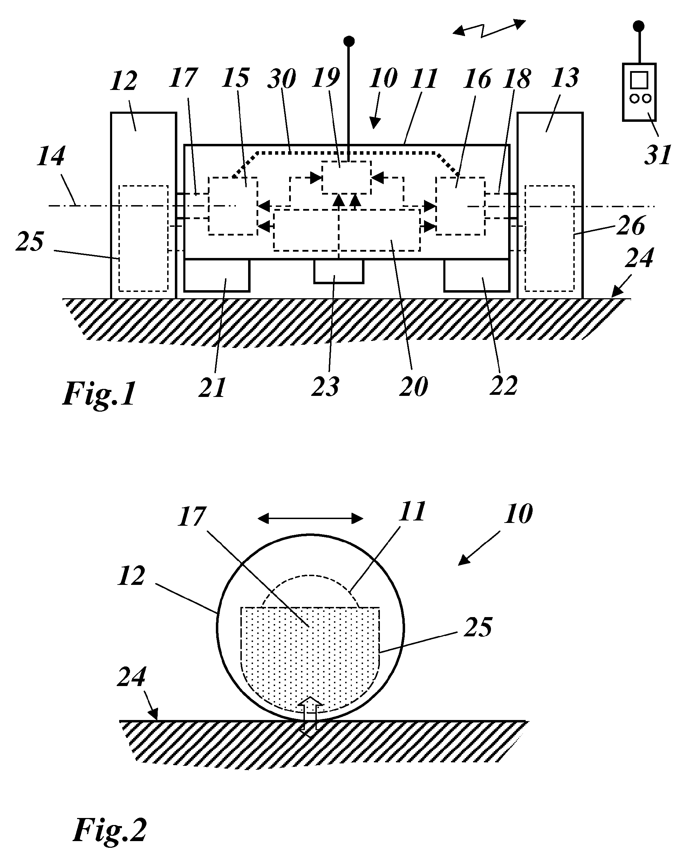

Aus der WO-A1-01/28797 ist ein einachsiges Fahrzeug mit zwei unabhängig angetriebene Rädern bekannt (siehe z.B. die dortige Fig. 1), bei welchem die Lenkung durch unterschiedliche Drehgeschwindigkeit der Räder bewirkt wird und ein tiefliegender Schwerpunkt für die Fortbewegung des Fahrzeugs sorgt.

Aus der US-B1-7,056,185 ist ein ferngesteuertes einachsiges Geländefahrzeug bekannt, dass mit in allen Richtungen wirksamen Rädern ausgestattet ist und daher ein sehr aufwändige und anfällige Mechanik aufweist.

In der US-A1-2008/0173493 ist ein zweirädriger Roboter beschrieben, wobei ausführlich auf die für den Betrieb notwendige Steuerung der angetriebenen Räder eingegangen wird.

Schliesslich ist unter dem Markennamen Recon Scout^{®} ein einachsiger, zweirädriger, miniaturisierter mobiler Roboter bekannt, der ferngesteuert in einer feindlichen oder gefährlichen Umgebung mit einer eingebauten Videokamera Bilder aufnehmen und an einen Empfänger übermitteln kann. Der robust ausgeführte Roboter hat Kunststoffräder, zwischen denen ein zylindrisches Gehäuse aus Titan angeordnet ist, in welchen die Kamera, der Antrieb und die Steuerung untergebracht sind. Am Gehäuse ist aussen ein flexibler Stabilisierungsschwanz ("stabilizing tail") angebracht, der eine Rotation des Gehäuses beim Vorwärtsfahren verhindert. Ein solcher Roboter hat einen beispielhaften Raddurchmesser von etwa 8 cm, eine Länge in axialer Richtung von etwa 19 cm und ein Gewicht von etwa 0,5 kg.

Aus der JP 9175454 ist ein gattungsgemässes Fahrzeug nach Art einer Gondel bekannt, die an einer vertikalen Wand hochgezogen oder heruntergelassen werden kann. Die Gondel (Figur 12,13) weist an den vier Ecken eines rechteckigen Rahmens jeweils eine um eine vertikale Achse drehbare Radanordnung auf, bei der innerhalb eines äußeren Hohlrades an der Radachse frei drehbar ein Permanentmagnet gelagert ist, der dem Rad fortlaufend die Haftung an der Unterlage vermittelt.

Von diesen bekannten einachsigen, zweirädrigen Fahrzeugen setzt sich das erfindungsgemässe Fahrzeug dadurch ab, dass es Haftmittel, magnetische Mittel enthält, mit denen es sich auch an vertikalen oder über Kopf stehenden Wänden aus ferromagnetischem Material so halten kann, dass seine Räder den Kontakt zur Wand nicht verlieren. Es versteht sich dabei von selbst, dass die Haftmittel bzw. magnetischen Mittel ausreichend stark sein müssen, um das Fahrzeug mitsamt seinen eingebauten (optischen oder anderweitigen) Inspektionseinrichtungen gegen die Schwerkraft über Kopf an einer Innenwand zu halten.

Grundsätzlich könnte eine haftende Wirkung durch Unterdruck (Saugmittel) oder Klebemittel erreicht werden. Gemäss der Erfindung umfassen die Haftmittel bzw. magnetischen Mittel jedoch wenigstens einen Permanentmagneten. Vorzugsweise sind wenigstens zwei Permanentmagnete vorgesehen, die den einzelnen Rädern zugeordnet sind. Erfindungsgemäss sind die Permanentmagnete zum Schutz vor äusseren Einwirkungen teilweise oder ganz in den Rädern angeordnet. Hierdurch ergibt sich der Vorteil, dass die Permanentmagnete genau dort platziert sind, wo der Kontakt zwischen Rad und Wand aufrechterhalten werden muss, was sich besonders bei unebenen Wänden günstig auswirkt. Mit entsprechend ausgelegten Permanentmagneten lassen sich grosse Haftkräfte erreichen, ohne dass in dem Fahrzeug dafür Energie bereitgestellt werden muss.

Gemäss einer anderen Ausgestaltung sind die Permanentmagnete von den Rädern des Fahrzeugs entkoppelt. Die Entkupplung sorgt dafür, dass die Permanentmagnete auf die Wand ausgerichtet bleiben, wenn sich die Räder drehen, bzw. sich (in einer Raumecke) auf eine andere Wand ausrichten können, ohne dass sich die Räder bewegen müssen.

Der unabhängige Antrieb der Räder kann grundsätzlich durch entsprechende Differentialanordnungen erreicht werden, wie dies in der eingangs genannten Druckschrift DE-U1-298 08 730 beschrieben ist. Gemäss einer Ausgestaltung der Erfindung ist jedem der Räder jedoch ein eigener Antrieb zugeordnet, und die Antriebe werden aus einem im Fahrzeug untergebrachten Energiespeicher mit Energie versorgt und von einer im Fahrzeug untergebrachten Steuerung gesteuert. Hierdurch lässt sich mit geringem konstruktiven Aufwand eine grosse Beweglichkeit des Fahrzeugs erreichen. Als Energiespeicher kommt insbesondere eine Batterie oder ein Akkumulator in Betracht.

Es ist im Rahmen der Erfindung durchaus denkbar, dass das Fahrzeug über eine Steuerleitung von aussen gesteuert und die Inspektionsergebnisse über diese Leitung auch nach aussen übertragen werden. Um dem Fahrzeug jedoch eine uneingeschränkte Manövrierfähigkeit zu ermöglichen, ist es von Vorteil, wenn die Steuerung von aussen auf drahtlosem Wege Steuerbefehle empfangen kann. Entsprechend werden dann die Inspektionsergebnisse drahtlos nach aussen übertragen oder aber im Fahrzeug für eine spätere Auswertung abgespeichert.

Eine verbesserte Anpassung des Fahrzeugs an einen unebenen Untergrund kann gemäss einer weiteren Ausgestaltung dadurch erreicht werden, dass die wenigstens zwei Räder durch einen als Federung wirkenden, elastisch biegsamen Querträger miteinander verbunden sind.

Um die im Fahrzeug untergebrachten Einrichtungen wie Antrieb und Steuerung zu platzsparend zu schützen, weist das Fahrzeug gemäss einer anderen Ausgestaltung ein sich zwischen den Rädern in axialer Richtung erstreckendes, vorzugsweise zylindrisches Gehäuse auf.

Zu Inspektions- und/oder Steuerungszwecken ist am Fahrzeug wenigstens ein Sensor aus der Reihe Kamera, optischer Sensor, elektrischer Sensor, elektromagnetischer Sensor, Ultraschallsensor, oder dgl., angeordnet. Eine Videokamera kann dabei (mit entsprechender Ausleuchtung durch eine mitgeführte Lichtquelle) zur optischen Erkennung der Wandbeschaffenheit, aber auch zur Erkennung des Fahrweges eingesetzt werden. Andere Sensoren, die beispielsweise mit Ultraschall oder Wirbelströmen arbeiten, können zur Risserkennung bzw. zerstörungsfreien Werkstoffprüfung eingesetzt werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer Seitenansicht senkrecht zur Achse ein Inspektionsfahrzeug gemäss einem Ausführungsbeispiel der Erfindung;
- Fig. 2: das Fahrzeug aus Fig. 1 in einer Seitenansicht in Richtung der Achse;
- Fig. 3: in mehreren Teilbildern (3a bis 3d) den Bewegungsablauf des Fahrzeugs aus Fig. 2 beim Durchfahren einer rechtwinkligen Raumecke und
- Fig. 4: schematisch das Einführen des Fahrzeugs aus Fig. 1 durch eine schmale Öffnung in einen erweiterten Innenraum.

### WEGE ZUR AUSFÜHRUNG DER ERFINDUNG

In Fig. 1 ist in einer Seitenansicht senkrecht zur Achse ein Inspektionsfahrzeug gemäss einem Ausführungsbeispiel der Erfindung wiedergegeben. Das Fahrzeug 10 ist als einachsiges Fahrzeug ausgebildet und hat zwei Räder 12 und 13, die um eine gemeinsame Achse 14 drehbar gelagert und entlang der Achse 14 voneinander beabstandet sind. Die Räder 12, 13 bestehen vorzugsweise aus einem Material, z.B. einem Kunststoff, das keine magnetische Abschirmwirkung entfaltet. Das Material kann so gewählt sein, dass die Räder auf dem dafür vorgesehenen Untergrund, einer Innenwand 24 eines Gusskörpers, einen ausreichenden Griff haben. Der Aussenumfang der Räder 12, 13 kann aber auch mit einer entsprechenden Beschichtung versehen sein oder Elemente wie z.B. Querrippen aufweisen, die einen verbesserten Griff bewirken.

Zwischen den beiden Rädern 12, 13 erstreckt sich ein Gehäuse 11, in welchem die für den Antrieb und die Steuerung des Fahrzeugs 10 notwendigen Einrichtungen geschützt untergebracht sind. Das Gehäuse 11 ist vorzugsweise zylindrisch, um im Einsatz an Unebenheiten leichter abgleiten zu können. Damit das Fahrzeug 10 mit seinen Rädern in jeder Lage an der aus ferromagnetischem Material bestehenden Innenwand 24 anliegt, sind auf der Unterseite des Gehäuses zwei kräftige Permanentmagnete 21, 22 jeweils in unmittelbarer Nähe eines der Räder 12, 13 angeordnet. Durch diese Anordnung der Permanentmagnete 21, 22 ist gewährleistet, dass das Gehäuse 11 immer stabil in derselben Orientierung zur Innenwand 24 verbleibt, auch wenn sich die Räder 12, 13 vorwärts oder rückwärts drehen.

Jedes der beiden Räder 12, 13 wird über eine eigene Antriebswelle 17 bzw. 18 durch einen eigenen Antrieb 15 bzw. 16 angetrieben, der einen Elektromotor umfasst und aus einem Energiespeicher 20 mit Energie versorgt wird. Hierdurch können die Räder 12, 13 unabhängig voneinander beliebige Drehbewegungen ausführen und das Fahrzeug damit in die gewünschte Richtung lenken oder auf der Stelle drehen. Anstelle der beiden Antriebe 15, 16 kann aber auch ein einzelner Antrieb eingesetzt werden, wobei die Räder dann durch entsprechende Differentialvorrichtungen voneinander entkoppelt werden. Jedes Rad 12, 13 bildet zusammen mit der Antriebswelle 17, 18 und dem Antrieb 15, 16 eine Einheit. Werden die beiden Einheiten bzw. Antriebe durch einen elastisch biegsamen Querträger 30 mechanisch miteinander verbunden, der dann am Gehäuse verankert ist, ergibt sich für das Fahrzeug 10 eine Federung, die das Fahrverhalten verbessert.

Die Antriebe 15, 16 und damit die Bewegungsrichtung und Geschwindigkeit des Fahrzeugs 10 werden von einer Steuerung 19 gesteuert, die von einer Fernsteuereinrichtung 31 drahtlos Befehle empfängt und ggf. Inspektionsergebnisse nach draussen sendet. Die Steuerung 19 kann mit am Fahrzeug angeordneten Lage- und Beschleunigungssensoren zusammenarbeiten, um das Fahrzeug 10 im Gleichgewicht zu halten. Durch die Permanentmagnete 21, 22 hat das Fahrzeug 10 jedoch bereits eine stabile Lage, so dass eine solche Regelung nicht unbedingt notwendig ist.

Besonders vorteilhaft ist es, wenn anstelle der exponierten Permanentmagnete 21, 22 Permanentmagnete 25, 26 in den Rädern 12, 13 vorgesehen werden. Hierdurch sind die Permanentmagnete 25, 26 einerseits gegen Einwirkungen von aussen (Stösse, Staub, magnetisierbare Teilchen etc.) geschützt. Andererseits sind die anziehenden magnetischen Kräfte genau dort konzentriert, wo auch der Griff der Räder 12, 13 an der Innenwand 24 ansetzt. Die Permanentmagnete 25, 26 können beispielsweise die in Fig. 2 gezeigte, halbkreisähnliche Randkontur haben.

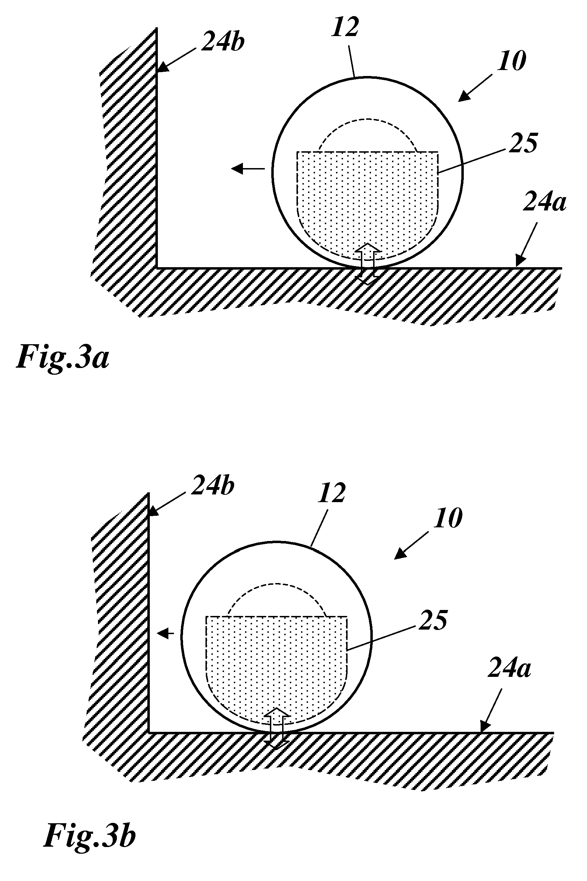

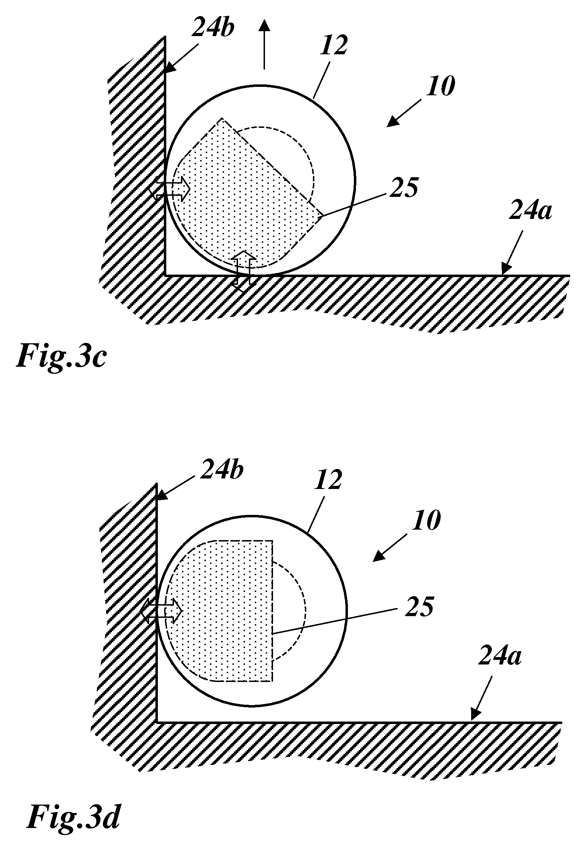

Die in Fig. 1 dargestellte Konstruktion des Fahrzeugs 10 führt dazu, dass das Fahrzeug in einem Innenraum ohne Probleme an Raumecken entlang fahren und an vertikalen Wänden aufsteigen oder sich über Kopf an Decken bewegen kann, wie dies aus Fig. 3 deutlich wird: In Fig. 3 ist eine Raumecke gezeigt, an der zwei Innenwände 24a,b eines zu inspizierenden Innenraumes im rechten Winkel aufeinanderstossen. Solange sich das Fahrzeug 10 auf der horizontalen Innenwand 24a fahrend (die Räder drehen entgegen dem Uhrzeigersinn) auf die vertikale Innenwand 24b zu bewegt (Fig. 3a, Fig. 3b), zeigt der asymmetrisch zur Achse 14 angeordnete Permanentmagnet 25 im vorderen Rad 12 (ebenso wie der nicht sichtbare Permanentmagnet 26 im hinteren Rad 13) nach unten und entwickelt senkrecht unterhalb der Achse die maximale Anziehungskraft (Doppelpfeil in Fig. 3a,b) im Bezug auf die darunterliegende Innenwand 24a.

Nähert sich das Fahrzeug 10 unmittelbar der vertikalen Innenwand 24b (Fig. 3c), richtet sich der Permanentmagnet 25 zunehmend zu gleichen Teilen auf die horizontale und vertikale Innenwand 24a bzw. 24b aus, so dass das Fahrzeug 10 mit seinen Rädern 12, 13 an beiden Wänden gleichzeitig anliegt. Drehen sich die Räder 12, 13 dann weiter entgegen dem Uhrzeigersinn, fährt das Fahrzeug 10 an der vertikalen Innenwand 24b senkrecht aufwärts, wobei sich der Permanentmagnet 25 mit zunehmender Entfernung von der horizontalen Innenwand 24a ausschliesslich auf die vertikale Innenwand 24b ausrichtet.

Wenn die Permanentmagnete 21, 22 bzw. 25, 26 fest mit dem Gehäuse 11 verbunden sind, hat das Gehäuse 11 eine entsprechende Ausrichtung zur jeweiligen Innenwand, auf deren Oberfläche sich das Fahrzeug 10 bewegt. Sind Sensoren 23 (Kameras, Rissdetektoren etc.; Fig. 1) am Gehäuse 11 angebracht, sind diese in gleicher Weise zur Wandoberfläche orientiert. Sind die Permanentmagnete dagegen um die Achse 14 frei schwenkbar gelagert, kann das Gehäuse 11 mit den daran befestigten Sensoren 23 durch eine entsprechende Lageregelung mit Lagesensoren in eine beliebig einstellbare Lage gebracht werden.

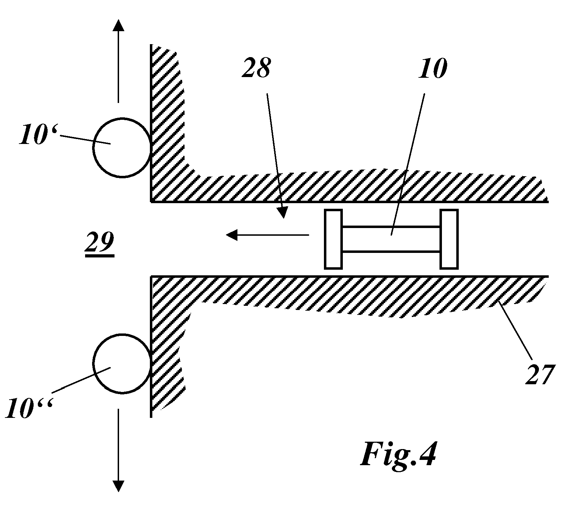

Fig. 4 zeigt schematisch das Einführen des Fahrzeugs 10 aus Fig. 1 durch eine schmale Öffnung in einen erweiterten Innenraum 29. Durch das günstige Verhältnis von Raddurchmesser zu axialer Länge kann das Fahrzeug 10 in axialer Orientierung durch eine enge Bohrung 28 in das Innere eines Dampfkastens 27 oder dgl. eingeführt werden, um dann - wie die anderen Fahrzeuge 10' und 10" - zu Inspektionszwecken an der Innenwand des erweiterten Innenraums 29 entlang zu fahren. Hieraus wird zugleich deutlich, dass die Inspektion einer grösseren Struktur schneller abgewickelt werden kann, wenn mehrere Fahrzeuge der beschriebenen Art gleichzeitig zur Inspektion eingesetzt werden. Des Weiteren ist es denkbar, mehrere Fahrzeuge der beschriebenen Art mechanisch zu einem beweglichen grösseren Verband zusammenzukoppeln.

### BEZUGSZEICHENLISTE

- 10,10',10": Inspektionsfahrzeug
- 11: Gehäuse
- 12,13: Rad
- 14: Achse
- 15,16: Antrieb
- 17,18: Antriebswelle
- 19: Steuerung
- 20: Energiespeicher (z.B. Batterie)
- 21,22: Permanentmagnet
- 23: Sensor
- 24,24a,b: Innenwand
- 25,26: Permanentmagnet
- 27: Dampfkasten
- 28: Bohrung
- 29: Innenraum
- 30: Querträger (federnd)
- 31: Fernsteuereinrichtung

## Patentansprüche

1. Fahrzeug (10, 10', 10") zur selbständigen Inspektion von schwer zugänglichen Innenräumen (29), die von ferromagnetischen Innenwänden (24; 24a,b) begrenzt sind, insbesondere in grossen Gussteilen wie z.B. Dampfkästen einer Dampfturbine, welches Fahrzeug (10, 10', 10") wenigstens zwei um eine gemeinsame Achse (14) drehbare, in axialer Richtung voneinander beabstandete, unabhängig voneinander antreibbare Räder (12, 13) umfasst, und wobei das Fahrzeug (10, 10', 10") Haftmittel (21, 22; 25, 26) aufweist, welche das Fahrzeug (10, 10', 10") entgegen der Schwerkraft mit den Rädern (12, 13) an der jeweiligen Innenwand (24; 24a, b) halten, und **dadurch gekennzeichnet, dass** das Fahrzeug ein einachsiges, zweirädriges Fahrzeug ist, wobei die Haftmittel wenigstens einen Permanentmagneten umfassen und dass die Permanentmagnete (25, 26) zum Schutz vor äusseren Einwirkungen teilweise oder ganz in den Rädern (12, 13) angeordnet sind.

2. Fahrzeug nach Anspruch 1 **dadurch gekennzeichnet, dass** wenigstens zwei Permanentmagnete (21, 22; 25, 26) vorgesehen sind, die den einzelnen Rädern (12, 13) zugeordnet sind.

3. Fahrzeug nach Anspruch 1 oder 2, **dadurch gekennzeichnet, dass** die Permanentmagnete (21, 22; 25, 26) von den Rädern (12, 13) des Fahrzeugs (10, 10', 10") entkoppelt sind.

4. Fahrzeug nach einem der Ansprüche 1 bis 3, **dadurch gekennzeichnet, dass** jedem der Räder (12, 13) ein eigener Antrieb (15, 16) zugeordnet ist, und dass die Antriebe (15, 16) aus einem im Fahrzeug (10, 10', 10") untergebrachten Energiespeicher (20) mit Energie versorgt und von einer im Fahrzeug (10, 10', 10") untergebrachten Steuerung (19) gesteuert werden.

5. Fahrzeug nach Anspruch 4, **dadurch gekennzeichnet, dass** die Steuerung (19) von aussen auf drahtlosem Wege Steuerbefehle empfangen kann.

6. Fahrzeug nach einem der Ansprüche 1 bis 5, **dadurch gekennzeichnet, dass** die wenigstens zwei Räder (12, 13) durch einen als Federung wirkenden, elastisch biegsamen Querträger (30) miteinander verbunden sind.

7. Fahrzeug nach einem der Ansprüche 1 bis 6, **dadurch gekennzeichnet, dass** das Fahrzeug (10, 10', 10") ein sich zwischen den Rädern in axialer Richtung erstreckendes, vorzugsweise zylindrisches Gehäuse (11) aufweist.

8. Fahrzeug nach einem der Ansprüche 1 bis 7, **dadurch gekennzeichnet, dass** am Fahrzeug (10, 10', 10") wenigstens ein Sensor (23) aus der Reihe Kamera, optischer Sensor, elektrischer Sensor, elektromagnetischer Sensor, Ultraschallsensor oder dgl. angeordnet ist.

## Claims

1. Vehicle (10, 10', 10'') for the independent inspection of hard-to-reach inner spaces (29) which are bounded by ferromagnetic inner walls (24; 24a, b), especially in large cast parts, such as steam chests of a steam turbine, which vehicle (10, 10', 10'') comprises at least two wheels (12, 13) which are rotatable around a common axis (14), are at a distance from each other in the axial direction, and can be driven independently of each other, and wherein the vehicle (10, 10', 10'') has adherence means (21, 22; 25, 26) which hold the vehicle (10, 10', 10'') against the force of gravity with the wheels (12, 13) on the respective inner wall (24; 24a, b), and **characterized in that** the vehicle is a single-axle, two-wheeled vehicle, wherein the adherence means comprise at least one permanent magnet, and **in that** the permanent magnets (25, 26) are arranged partially or completely in the wheels (12, 13) for protection against outside influences.

2. Vehicle according to Claim 1, **characterized in that** provision is made for at least two permanent magnets (21, 22; 25, 26) which are associated with the individual wheels (12, 13).

3. Vehicle according to Claim 1 or 2, **characterized in that** the permanent magnets (21, 22; 25, 26) are decoupled from the wheels (12, 13) of the vehicle (10, 10', 10'').

4. Vehicle according to one of Claims 1 to 3, **characterized in that** a separate drive (15, 16) is associated with each of the wheels (12, 13), and **in that** the drives (15, 16) are supplied with power from an energy storage (20) which is accommodated in the vehicle (10, 10', 10'') and are controlled by a control unit (19) which is accommodated in the vehicle (10, 10' , 10'').

5. Vehicle according to Claim 4, **characterized in that** the control unit (19) can receive control commands from the outside in a wireless manner.

6. Vehicle according to one of Claims 1 to 5, **characterized in that** the at least two wheels (12, 13) are interconnected by means of an elastically flexible cross-member (30) which acts as a spring suspension.

7. Vehicle according to one of Claims 1 to 6, **characterized in that** the vehicle (10, 10', 10") has a preferably cylindrical housing (11) which extends between the wheels in the axial direction.

8. Vehicle according to one of Claims 1 to 7, **characterized in that** at least one sensor (23) from the series consisting of camera, optical sensor, electric sensor, electromagnetic sensor, ultrasonic sensor or the like is arranged on the vehicle (10, 10', 10'').

## Revendications

1. Véhicule (10, 10', 10'') pour l'inspection autonome d'espaces intérieurs difficilement accessibles (29) qui sont limités par des parois intérieures ferromagnétiques (24 ; 24a,b), en particulier dans des grosses pièces coulées comme par exemple des distributeurs de vapeur d'une turbine à vapeur, lequel véhicule (10, 10', 10'') comprend au moins deux roues (12, 13) pouvant être entraînées indépendamment les unes des autres, espacées les unes des autres dans la direction axiale, pouvant tourner autour d'un axe commun (14), et le véhicule (10, 10', 10'') présentant des moyens d'adhérence (21, 22 ; 25, 26) qui retiennent le véhicule (10, 10', 10'') à l'encontre de la force de pesanteur avec les roues (12, 13) contre la paroi intérieure respective (24 ; 24a,b), et **caractérisé en ce que** le véhicule est un véhicule à deux roues et à un essieu, les moyens d'adhérence comprenant au moins un aimant permanent et **en ce que** les aimants permanents (25, 26) sont disposés en partie ou complètement dans les roues (12, 13) pour les protéger contre les influences extérieures.

2. Véhicule selon la revendication 1, **caractérisé en ce qu'**au moins deux aimants permanents (21, 22 ; 25, 26) sont prévus, lesquels sont associés dans les roues individuelles (12, 13).

3. Véhicule selon la revendication 1 ou 2, **caractérisé en ce que** les aimants permanents (21, 22 ; 25, 26) sont désaccouplés des roues (12, 13) du véhicule (10, 10', 10'').

4. Véhicule selon l'une quelconque des revendications 1 à 3, **caractérisé en ce qu'**un entraînement propre (15, 16) est associé à chacune des roues (12, 13), et **en ce que** les entraînements (15, 16) sont alimentés en énergie à partir d'un accumulateur d'énergie (20) monté dans le véhicule (10, 10', 10'') et sont commandés par une commande (19) montée dans le véhicule (10, 10', 10'').

5. Véhicule selon la revendication 4, **caractérisé en ce que** la commande (19) peut recevoir des ordres de commande depuis l'extérieur par voie sans fil.

6. Véhicule selon l'une quelconque des revendications 1 à 5, **caractérisé en ce que** les au moins deux roues (12, 13) sont connectées l'une à l'autre par une traverse flexible élastique (30) agissant en tant que suspension.

7. Véhicule selon l'une quelconque des revendications 1 à 6, **caractérisé en ce que** le véhicule (10, 10', 10'') présente un boîtier de préférence cylindrique (11) s'étendant entre les roues dans la direction axiale.

8. Véhicule selon l'une quelconque des revendications 1 à 7, **caractérisé en ce qu'**au moins un capteur (23) appartenant au groupe comprenant une caméra, un capteur optique, un capteur électrique, un capteur électromagnétique, un capteur à ultrasons ou similaire est disposé sur le véhicule (10, 10', 10'').
